(19) Europäisches Patentamt
European Patent Office
Office européen des brevets

(11) **EP 4 749 879 A1**

(12) **EUROPEAN PATENT APPLICATION**
published in accordance with Art. 153(4) EPC

(43) Date of publication:
**27.05.2026 Bulletin 2026/22**

(21) Application number: **24847905.7**

(22) Date of filing: **29.06.2024**

(51) International Patent Classification (IPC):
*H02J 7/34* *(2006.01)*

(86) International application number:
**PCT/CN2024/102753**

(87) International publication number:
**WO 2025/025944 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023 CN 202310956044**

(71) Applicant: **BYD Company Limited
Shenzhen, Guangdong 518118 (CN)**

(72) Inventors:
• **LI, Qiyang
Shenzhen, Guangdong 518118 (CN)**

• **YIN, Xueqin
Shenzhen, Guangdong 518118 (CN)**
• **CAO, Hu
Shenzhen, Guangdong 518118 (CN)**
• **FU, Mengti
Shenzhen, Guangdong 518118 (CN)**
• **YIN, Xiaoqiang
Shenzhen, Guangdong 518118 (CN)**

(74) Representative: **Taor, Simon Edward William et al
Venner Shipley LLP
TIDE Bankside
8 Emerson Street
London SE1 9DU (GB)**

(54) **BATTERY CONTROL METHOD, BATTERY SYSTEM, POWER SUPPLY SYSTEM, ENERGY STORAGE DEVICE, STORAGE MEDIUM, AND CHIP**

(57) Provided are a battery control method, a battery system, a power supply system, an energy storage device, a storage medium, and a chip. The battery control method includes: obtaining a first voltage and a second voltage, where the first voltage is a voltage of a first battery module, the second voltage is a voltage of a second battery module, the first battery module is electrically connected to the second battery module, and the first battery module and the second battery module have different capacities; and controlling an operating mode of a direct current-direct current (DCDC) converter based on a voltage difference between the first voltage and the second voltage, where the DCDC converter is electrically connected to the second battery module, and the DCDC converter is configured to control an input power or an output power of the second battery module.

S101

Obtain a first voltage and a second voltage

S102

Control an operating mode of the DCDC converter based on a voltage difference between the first voltage and the second voltage

FIG. 1

EP 4 749 879 A1

## Description

This application claims priority to Chinese Patent Application No. 202310956044.0, filed with the China National Intellectual Property Administration on July 31, 2023 and entitled "BATTERY CONTROL METHOD, BATTERY SYSTEM, AND POWER SUPPLY SYSTEM", which is incorporated herein by reference in its entirety.

## TECHNICAL FIELD

This application relates to the field of new energy technologies, and in particular, to a battery control method, a battery system, a power supply system, an energy storage device, a storage medium, and a chip.

## BACKGROUND

An electrical device is usually equipped with a built-in battery before delivery and powered by the battery. During use of the battery, a current battery system may need to be expanded possibly because a high-power electrical device is added, an existing battery is aged, or long-time power supply is required. For example, a battery pack is newly added to an existing battery system.

However, using battery packs having different capacities, especially newly added battery packs having capacities that are significantly different from a capacity of an original battery pack, to expand a battery system easily causes low safety of the battery system.

## SUMMARY

This application provides a battery control method, a battery system, a power supply system, an energy storage device, a storage medium, and a chip, thereby improving safety of expansion of the battery system.

According to a first aspect, an embodiment of this application provides a battery control method. The method includes: obtaining a first voltage and a second voltage, where the first voltage is a voltage of a first battery module, the second voltage is a voltage of a second battery module, the first battery module is electrically connected to the second battery module, and the second battery module and the first battery module have different capacities; and controlling an operating mode of a direct current-direct current (direct current-direct current, DCDC) converter based on a voltage difference between the first voltage and the second voltage, where the DCDC converter is electrically connected to the second battery module, and the DCDC converter is configured to control an input power or an output power of the second battery module.

In this embodiment of this application, the input power or the output power of the second battery module may be controlled by using software of the DCDC converter based on the voltage difference between the first battery module and the second battery module, so that the second battery module having a capacity different from a capacity of the first battery module is incorporated into a battery system to implement expansion of the battery system, thereby performing the expansion of the battery system more conveniently and safely.

In some implementations, the controlling the operating mode of the DCDC converter based on the voltage difference between the first voltage and the second voltage includes: in a charging state, if the second voltage is less than the first voltage, and the voltage difference between the first voltage and the second voltage is greater than or equal to a first preset voltage threshold, controlling the DCDC converter to operate in a Buck mode, where the Buck mode is used to step down an input voltage of the second battery module to a third voltage, and a difference between the third voltage and the second voltage is less than or equal to a first threshold.

In some implementations, the controlling the operating mode of the DCDC converter based on the voltage difference between the first voltage and the second voltage includes: in a discharging state, if the second voltage is less than the first voltage, and the voltage difference between the first voltage and the second voltage is greater than or equal to the first preset voltage threshold, controlling the DCDC converter to operate in a Boost mode, where the Boost mode is used to step up an output voltage of the second battery module to a fourth voltage, and a difference between the fourth voltage and the first voltage is less than or equal to a second threshold.

In some implementations, the controlling the operating mode of the DCDC converter based on the voltage difference between the first voltage and the second voltage includes: in the charging state, if the second voltage is greater than the first voltage, and the voltage difference between the first voltage and the second voltage is greater than or equal to a second preset voltage threshold, controlling the DCDC converter to operate in the Boost mode, where the Boost mode is used to step up the input voltage of the second battery module to a fifth voltage, and a difference between the fifth voltage and the second voltage is less than or equal to a third threshold.

In some implementations, the controlling the operating mode of the DCDC converter based on the voltage difference between the first voltage and the second voltage includes: in the discharging state, if the second voltage is greater than the first voltage, and the voltage difference between the first voltage and the second voltage is greater than or equal to the second preset voltage threshold, controlling the DCDC converter to operate in the Buck mode, where the Buck mode is used to step down the output voltage of the second battery module to a sixth voltage, and a difference between the sixth voltage and the first voltage is less than or equal to a fourth threshold.

In some implementations, the controlling the operating mode of the DCDC converter based on the voltage difference between the first voltage and the second voltage includes: in the charging state or the discharging state, if the voltage difference between the first voltage and the second voltage is less than or equal to a third preset voltage threshold, controlling the DCDC converter to operate in a pass-through mode, where the pass-through mode is adapted to not change a magnitude of the input voltage or the output voltage of the second battery module.

According to a second aspect, an embodiment of this application provides a battery system, including:

a first battery module, where a positive electrode of the first battery module is electrically connected to a positive terminal of a direct current bus, and a negative electrode of the first battery module is electrically connected to a negative terminal of the direct current bus;

a second battery module, where the second battery module is electrically connected to the first battery module, the second battery module is electrically connected to the direct current bus, and the second battery module and the first battery module have different capacities;

a direct current-direct current (DCDC) converter, where a first end of the DCDC converter is electrically connected to the second battery module, a second end of the DCDC converter is electrically connected to the direct current bus, and the DCDC converter is configured to control an input power or an output power of the second battery module; and

a control unit, configured to obtain a first voltage and a second voltage, and control an operating mode of the DCDC converter of the battery system based on a voltage difference between the first voltage and the second voltage, where the first voltage is a voltage of the first battery module, and the second voltage is a voltage of the second battery module.

In this embodiment of this application, the input power or the output power of the second battery module may be controlled by using software of the DCDC converter based on the voltage difference between the first battery module and the second battery module, so that the second battery module having a capacity different from a capacity of the first battery module is incorporated into a battery system to implement expansion of the battery system, thereby performing the expansion of the battery system more conveniently and safely.

It should be understood that specific content of the second aspect corresponds to content of the first aspect. For a corresponding feature of the second aspect and an achieved beneficial effect, refer to description of the first aspect. To avoid repetition, detailed description is omitted as appropriate herein.

In some implementations, the control unit configured to control the operating mode of the DCDC converter of the battery system based on the voltage difference between the first voltage and the second voltage is specifically configured to:

if the second voltage is less than the first voltage, the voltage difference between the first voltage and the second voltage is greater than or equal to a first preset voltage threshold, and the battery system is in a charging state, control the DCDC converter to operate in a Buck mode, where the Buck mode is used to step down an input voltage of the second battery module to a third voltage, and a difference between the third voltage and the second voltage is less than or equal to a first threshold.

In some implementations, the control unit configured to control the operating mode of the DCDC converter of the battery system based on the voltage difference between the first voltage and the second voltage is specifically configured to:

if the second voltage is less than the first voltage, the voltage difference between the first voltage and the second voltage is greater than or equal to the first preset voltage threshold, and the battery system is in a discharging state, control the DCDC converter to operate in a Boost mode, where the Boost mode is used to step up an output voltage of the second battery module to a fourth voltage, and a difference between the fourth voltage and the first voltage is less than or equal to a second threshold.

In some implementations, the control unit configured to control the operating mode of the DCDC converter of the battery system based on the voltage difference between the first voltage and the second voltage is specifically configured to:

if the second voltage is greater than the first voltage, the voltage difference between the first voltage and the second voltage is greater than or equal to a second preset voltage threshold, and the battery system is in the charging state, control the DCDC converter to operate in the Boost mode, where the Boost mode is used to step up the input voltage of the second battery module to a fifth voltage, and a difference between the fifth voltage and the second voltage is less than or equal to a third threshold.

In some implementations, the control unit configured to control the operating mode of the DCDC converter of the battery system based on the voltage difference between the first voltage and the second voltage is specifically configured to:

if the second voltage is greater than the first voltage, the voltage difference between the first voltage and the second voltage is greater than or equal to the second preset voltage threshold, and the battery system is in the discharging state, control the DCDC converter to operate in the Buck mode, where the Buck mode is used to step down the output voltage of the second battery module to a sixth voltage, and a difference between the sixth voltage and the first voltage is less than or equal to a fourth threshold.

In some implementations, the control unit configured to control the operating mode of the DCDC converter of the battery system based on the voltage difference between the first voltage and the second voltage is specifically configured to:

if the voltage difference between the first voltage and the second voltage is less than or equal to a third preset voltage threshold, and the battery system is in the charging state or the discharging state, control the DCDC converter to operate in a pass-through mode, where the pass-through mode is adapted to not change a magnitude of the input voltage or the output voltage of the second battery module.

In some implementations, the DCDC converter includes a first switch, a second switch, a third switch, and a fourth switch. A first end of the DCDC converter is separately electrically connected to a first end of the first switch and a first end of the second switch. A second end of the DCDC converter is electrically connected to a first end of the third switch and a first end of the fourth switch. A second end of the first switch is electrically connected to a first end of the second switch. A second end of the second switch is electrically connected to a first end of the third switch. A second end of the third switch is electrically connected to the second end of the fourth switch.

In some implementations, the control unit is further configured to control the first switch to be normally closed and control the second switch to be normally open. The third switch and the fourth switch are turned on at a first duty cycle in a complementary manner.

In some implementations, the control unit is further configured to control the third switch to be normally open and control the fourth switch to be normally closed. The first switch and the second switch are turned on at a second duty cycle in a complementary manner.

According to a third aspect, an embodiment of this application provides a power supply system. The power supply system includes an electrical device and the battery system according to the second aspect or any one of embodiments of the second aspect. The battery system is configured to implement the battery control method according to the first aspect or any one of embodiments of the first aspect.

In some implementations, the power supply system further includes a power conversion apparatus. The power conversion apparatus is configured to provide an electric energy in the battery system to the electrical device.

According to a fourth aspect, an embodiment of this application provides an energy storage device, including the battery system according to the second aspect or any one of embodiments of the second aspect.

According to a fifth aspect, an embodiment of this application provides a computer-readable storage medium. The computer-readable storage medium stores a computer program. The computer program, when executed by a processor, implements the control method according to the first aspect or any one of embodiments of the first aspect.

According to a sixth aspect, an embodiment of this application provides a computer program product. The computer program product includes a computer program. The computer program, when executed by a processor, implements the control method according to the first aspect or any one of embodiments of the first aspect.

According to a seventh aspect, an embodiment of this application provides a chip. The chip includes an instruction. The instruction, when executed, implements the control method according to the first aspect or any one of embodiments of the first aspect.

## BRIEF DESCRIPTION OF DRAWINGS

In order to more clearly illustrate technical solutions in implementations of this application or in the prior art, the drawings that need to be used in the description of the implementations or the prior art are briefly introduced below. Obviously, the drawings described below are only some implementations of this application. For a person of ordinary skill in the art, other drawings may be obtained based on these drawings without creative efforts.

FIG. 1 is a flowchart of a battery control method according to an embodiment of this application;
FIG. 2 is a diagram of a structure of a battery system according to an embodiment of this application;
FIG. 3 is a diagram of a structure of a battery module according to an embodiment of this application;
FIG. 4 is a diagram of a structure of a DCDC converter according to an embodiment of this application;
FIG. 5 is a diagram of an operating mode of a DCDC converter according to an embodiment of this application;
FIG. 6 is a diagram of an operating mode of a DCDC converter according to another embodiment of this application;
FIG. 7 is a diagram of an operating mode of a DCDC converter according to another embodiment of this application; and
FIG. 8 is a flowchart of control of a DCDC converter according to an embodiment of this application.

## DESCRIPTION OF EMBODIMENTS

The following clearly and completely describes technical solutions in implementations of this application with reference to the drawings in the implementations of this application. It is clear that the described implementations are merely some but not all of the implementations of this application. All other implementations obtained by a person of ordinary skill in the art based on the implementations of this application without creative efforts shall fall within the scope of protection of this application.

It should be noted that, when a component is considered to be "connected" to another component, the component may be directly or indirectly connected to another component.

Unless otherwise defined, all technical and scientific terms used in this application have the same meanings as commonly understood by a person of ordinary skill in the art to which this application belongs. Terms used in this specification of this application are merely intended to describe specific embodiments, but are not intended to limit this application. A term "and/or" as used in this application includes any and all combinations of one or more of associated listed items.

The following describes in detail some implementations of this application with reference to the drawings. In the absence of conflict, the following embodiments and features within the embodiments may be combined with each other.

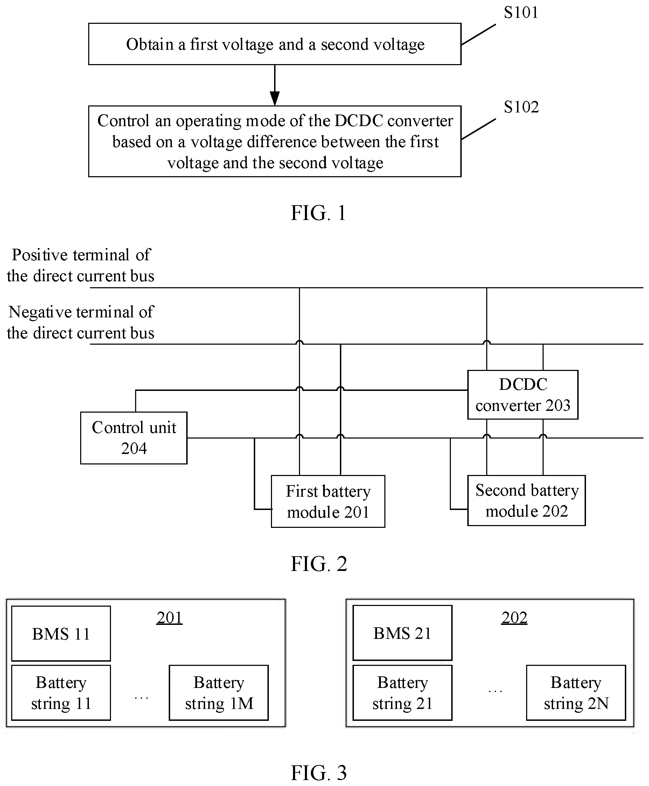

An embodiment of this application provides a battery control method. Refer to FIG. 1. FIG. 1 is a flowchart of a battery control method according to an embodiment of this application. The method may be performed by a control unit (for example, an energy management control unit (energy management control unit, EMCU)). As shown in FIG. 1, the battery control method may include at least the following operations.

S101: Obtain a first voltage and a second voltage.

When a battery system needs to be expanded, a first battery module is included, and a second battery module may be connected. The first battery module and the second battery module have different capacities. In a possible implementation, the first battery module may be an old battery module in the battery system, and the second battery module may be a new battery module in the battery system. In another possible implementation, the first battery module may be a small-capacity battery module in the battery system, and the second battery module may be a large-capacity battery module in the battery system. In this embodiment, the first battery module and the second battery module may be battery modules of a same model (type) or battery modules of different models. This application does not limit a capacity difference between the first battery module and the second battery module. There may be one or more first battery modules and second battery modules.

It may be understood that the battery module in this embodiment of this application may be a battery module, a battery pack, a battery cluster, or the like.

A first voltage may be understood as a rated voltage of the first battery module, and a second voltage may be understood as a rated voltage of the second battery module. Because the first battery module and the second battery module have different capacities, the first voltage module and the second voltage module also have different rated voltages.

In a possible implementation, when the second battery module is connected, the second battery module may be connected based on a voltage of a direct current bus and a voltage of the second battery module by stepping up/down a voltage of a direct current-direct current (direct current-direct current, DCDC) converter. Specifically, the second battery module may be electrically connected to the direct current bus by using the DCDC converter. The DCDC converter may operate in a constant current mode or a pass-through mode. An input current/voltage range of the DCDC converter meets a current/voltage conversion range of the battery module. The DCDC converter may operate in a Buck constant current mode, a Boost constant current mode, or the pass-through mode.

For example, when a voltage of the direct current bus is less than a voltage of the second battery module, the DCDC converter is controlled to operate in the Buck constant current mode. When the voltage of the direct current bus is greater than the voltage of the second battery module, the DCDC converter is controlled to operate in the Boost constant current mode. When the voltage of the direct current bus is close to the voltage of the second battery module, the DCDC converter is controlled to operate in the pass-through mode.

In this way, the DCDC converter can implement electrical connection between the first battery module and the second battery module in various operating conditions of the voltage of the direct current bus. For example, the voltage of the second battery module is greater than or less than the voltage of the direct current bus, so that the second battery module can be connected to the battery system, thereby balancing a state of each battery module well, and performing expansion of the battery system more conveniently and safely.

S102: Control an operating mode of the DCDC converter based on a voltage difference between the first voltage and the second voltage.

The control unit may obtain battery information of the first battery module and the second battery module. The battery information includes information such as a state of charge (state of charge, SOC, also referred to as remaining power), a total voltage, and an output current of all battery strings. The control unit may obtain circuit information of the DCDC converter. The circuit information includes information such as an operation state, an operation mode, and an output current of the DCDC converter. The control unit may further obtain scheduling information of the DCDC converter. The scheduling information includes: controlling start/stop of the DCDC based on an operation condition of the DCDC, giving an output target current of the DCDC converter when the DCDC converter is in a constant voltage mode; and controlling mode switching of the DCDC converter based on a mode switching condition of the DCDC.

Specifically, the controlling the operating mode of the DCDC converter based on the voltage difference between the first voltage and the second voltage includes: after obtaining the first voltage and the second voltage, controlling the operating mode of the DCDC converter by the control unit based on the voltage difference between the first voltage and the second voltage. Control of the operating mode of the DCDC converter may be specifically implemented in the following several possible implementations.

In a first possible implementation, if the second voltage is less than the first voltage, and the voltage difference between the first voltage and the second voltage is greater than or equal to a first preset voltage threshold: When the battery system is in a charging state, the DCDC converter is controlled to operate in a Buck mode, where the Buck mode is used to step down an input voltage of the second battery module to a third voltage, and a difference between the third voltage and the second voltage is less than or equal to a first threshold. It may be understood that, when the battery system is in the charging state, an electric energy of the direct current bus may charge the first battery module and the second battery module. If the second voltage is less than the first voltage, a voltage from the direct current bus, that is, the input voltage of the second battery module, may be stepped down by using the DCDC converter, thereby becoming the third voltage, charging the second battery module, and implementing parallel current sharing between the first battery module and the second battery module.

In a second possible implementation, if the second voltage is less than the first voltage, and the voltage difference between the first voltage and the second voltage is greater than or equal to the first preset voltage threshold: When the battery system is in a discharging state, the DCDC converter is controlled to operate in a Boost mode, where the Boost mode is used to step up an output voltage of the second battery module to a fourth voltage, and a difference between the fourth voltage and the first voltage is less than or equal to a second threshold. It may be understood that, when the battery system is in the discharging state, an electric energy in the first battery module and the second battery module may discharge the direct current bus. If the second voltage is less than the first voltage, the output voltage of the second battery module may be stepped up by using the DCDC converter, thereby becoming the fourth voltage to be transmitted to the direct current bus, and implementing parallel current sharing between the first battery module and the second battery module.

In a third possible implementation, if the second voltage is greater than the first voltage, and the voltage difference between the first voltage and the second voltage is greater than or equal to a second preset voltage threshold: When the battery system is in the charging state, the DCDC converter is controlled to operate in the Boost mode, where the Boost mode is used to step up the input voltage of the second battery module to a fifth voltage, and a difference between the fifth voltage and the second voltage is less than or equal to a third threshold.

In a fourth possible implementation, if the second voltage is greater than the first voltage, and the voltage difference between the first voltage and the second voltage is greater than or equal to the second preset voltage threshold: When the battery system is in the discharging state, the DCDC converter is controlled to operate in the Buck mode, where the Buck mode is used to step down the output voltage of the second battery module to a sixth voltage, and a difference between the sixth voltage and the first voltage is less than or equal to a fourth threshold.

In a fifth possible implementation, the first voltage may not be limited to be greater than or less than the second voltage. If the voltage difference is less than or equal to a third preset voltage threshold, that is, the first voltage is close to the second voltage, when the battery system is in the charging state or the discharging state, the DCDC converter is controlled to operate in a pass-through mode. The pass-through mode is adapted to not change (for example, not step up or step down) a magnitude of the input voltage or the output voltage of the second battery module.

It may be understood that in the foregoing different implementations, any two or more of the first threshold, the second threshold, the third threshold, and the fourth threshold may be a same threshold or different thresholds. This is described herein.

The operating mode of the DCDC converter is controlled by using different policies. The control unit may control the input power or the output power of the second battery module by using software of the DCDC converter based on the voltage difference between the first battery module and the second battery module, so that the second battery module having a capacity different from a capacity of the first battery module is incorporated into a battery system to implement expansion of the battery system, thereby performing the expansion of the battery system more conveniently and safely.

Refer to FIG. 2. FIG. 2 is a diagram of a structure of a battery system according to an embodiment of this application. As shown in FIG. 2, the battery system may include a first battery module 201, a second battery module 202, a control unit 204, a DCDC converter 203, and a direct current bus. A positive electrode of the first battery module 201 is electrically connected to a positive terminal of a direct current bus, and a negative electrode of the first battery module 201 is electrically connected to a negative terminal of the direct current bus. The second battery module 202 is electrically connected to the first battery module 201. The second battery module 202 is electrically connected to the direct current bus. The second battery module 202 and the first battery module 201 have different capacities. A first end of the DCDC converter 203 is electrically connected to the second battery module 202. A second end of the DCDC converter 203 is electrically connected to the direct current bus. The DCDC converter 203 is configured to control an input power or an output power of the second battery module 202.

The control unit 204 is configured to implement the battery control method shown in FIG. 1.

Specifically, the control unit 204 is configured to obtain a first voltage and a second voltage, and control an operating mode of the DCDC converter 203 based on a voltage difference between the first voltage and the second voltage.

After obtaining the first voltage and the second voltage, the control unit may control the operating mode of the DCDC converter based on the voltage difference between the first voltage and the second voltage. Control of the operating mode of the DCDC converter may be specifically implemented in the following several possible implementations.

In a first possible implementation, if the second voltage is less than the first voltage, and the voltage difference between the first voltage and the second voltage is greater than or equal to a first preset voltage threshold: When the battery system is in a charging state, the DCDC converter is controlled to operate in a Buck mode, where the Buck mode is used to step down an input voltage of the second battery module to a third voltage, and a difference between the third voltage and the second voltage is less than or equal to a first threshold. It may be understood that, when the battery system is in the charging state, an electric energy of the direct current bus may charge the first battery module and the second battery module. If the second voltage is less than the first voltage, a voltage from the direct current bus may be stepped down by using the DCDC converter, thereby becoming the third voltage, that is, the input voltage of the second battery module, charging the second battery module, and implementing parallel current sharing between the first battery module and the second battery module.

In a second possible implementation, if the second voltage is less than the first voltage, and the voltage difference between the first voltage and the second voltage is greater than or equal to the first preset voltage threshold: When the battery system is in a discharging state, the DCDC converter is controlled to operate in a Boost mode, where the Boost mode is used to step up an output voltage of the second battery module to a fourth voltage, and a difference between the fourth voltage and the first voltage is less than or equal to a second threshold. It may be understood that, when the battery system is in the discharging state, an electric energy in the first battery module and the second battery module may discharge the direct current bus. If the second voltage is less than the first voltage, the output voltage of the second battery module may be stepped up by using the DCDC converter, thereby becoming the fourth voltage to be transmitted to the direct current bus, and implementing parallel current sharing between the first battery module and the second battery module.

In a third possible implementation, if the second voltage is greater than the first voltage, and the voltage difference between the first voltage and the second voltage is greater than or equal to a second preset voltage threshold: When the battery system is in the charging state, the DCDC converter is controlled to operate in the Boost mode, where the Boost mode is used to step up the input voltage of the second battery module to a fifth voltage, and a difference between the fifth voltage and the second voltage is less than or equal to a third threshold.

In a fourth possible implementation, if the second voltage is greater than the first voltage, and the voltage difference between the first voltage and the second voltage is greater than or equal to the second preset voltage threshold: When the battery system is in the discharging state, the DCDC converter is controlled to operate in the Buck mode, where the Buck mode is used to step down the output voltage of the second battery module to a sixth voltage, and a difference between the sixth voltage and the first voltage is less than or equal to a fourth threshold.

In a fifth possible implementation, the first voltage may not be limited to be greater than or less than the second voltage. If the voltage difference is less than or equal to a third preset voltage threshold, that is, the first voltage is close to the second voltage, when the battery system is in the charging state or the discharging state, the DCDC converter is controlled to operate in a pass-through mode. The pass-through mode is adapted to not change (for example, not step up or step down) a magnitude of the input voltage or the output voltage of the second battery module.

In addition to operating in the charging state or the discharging state, an existing battery system also needs to operate in a standby state. However, the battery system of this application may control the input power or the output power of the second battery module by using the DCDC converter, so that the battery system only needs to operate in the charging state or the discharging state, and does not need a standby time slot. In this way, states of the first battery module and the second battery module are the same. Therefore, expansion efficiency may be improved.

Refer to FIG. 3. FIG. 3 is a diagram of a structure of a battery module according to an embodiment of this application. As shown in FIG. 3, the first battery module 201 may include at least one battery management system (battery management system, BMS) and at least one battery string. For example, the first battery module 201 includes a BMS (a BMS 11) and a battery string (a battery string 11). The BMS 11 is connected to the battery string 11. For another example, the first battery module 201 includes a BMS (BMS 11) and M battery strings (a battery string 11 to a battery string 1M), where M is a positive integer greater than or equal to 1. The BMS 11 is separately connected to the battery string 11 to the battery string 1M. The second battery module 202 may include at least one BMS and at least one battery string. For example, the second battery module 202 includes a BMS (a BMS 21) and a battery string (a battery string 21). The BMS 21 is connected to the battery string 21. For another example, the second battery module 202 includes a BMS (BMS 21) and N battery strings (a battery string 21 to a battery string 2N), where N is a positive integer greater than or equal to 1. The BMS 21 is separately connected to the battery string 21 to the battery string 2N.

In a possible implementation, the DCDC converter 203 may be connected to the direct current bus independently of the second battery module 202. The DCDC converter 203 may alternatively be included in the second battery module 202 and be connected to the direct current bus. A connection manner of the DCDC converter 203 is not limited in this embodiment of this application. In a possible implementation, the battery system may include at least one DCDC converter. For example, the battery system includes a DCDC converter 203, and the DCDC converter 203 is connected to the second battery module 202. For another example, the battery system includes a plurality of DCDC converters and a plurality of second battery modules. Each of the plurality of DCDC converters is connected to a BMS and a battery string in a corresponding second battery module.

The BMS may be configured to manage the battery strings. For example, the BMS may provide information such as an SOC and a cell voltage of each battery string (that is, a voltage of a single battery module or a single cell). In a possible implementation, the control unit 204 is further configured to obtain currents of the first battery module and the second battery module, calculate a balancing current, that is, a target current of the DCDC, and issue the balancing current to the DCDC converter.

Specifically, when the battery system is discharged, the target current of the DCDC may be:

$$I_{target} = k * I_{sum} * Soc\%$$

where $k$ denotes a charge-discharge coefficient, and is used to adjust an output capacity of the DCDC converter.

$I_{sum} = \sum_{i=1}^{n} I_i$ , where $n$ denotes a total number of current battery strings (including the first battery module and the second battery module), and $i$ denotes an index of a battery string. $Soc\% = Soc_j / Soc_{sum}$ ,

$Soc_{sum} = \sum_{j=1}^{m} Soc_j$ , where $m$ denotes a quantity of strings operating in a constant voltage mode, and $j$ denotes an index of a new battery string (a battery string in the second battery module).

It may be understood that, when the battery system is charged, $Soc_j$ in the foregoing formula is replaced with $1 - Soc_j$. This embodiment of this application may implement better current sharing control with low costs.

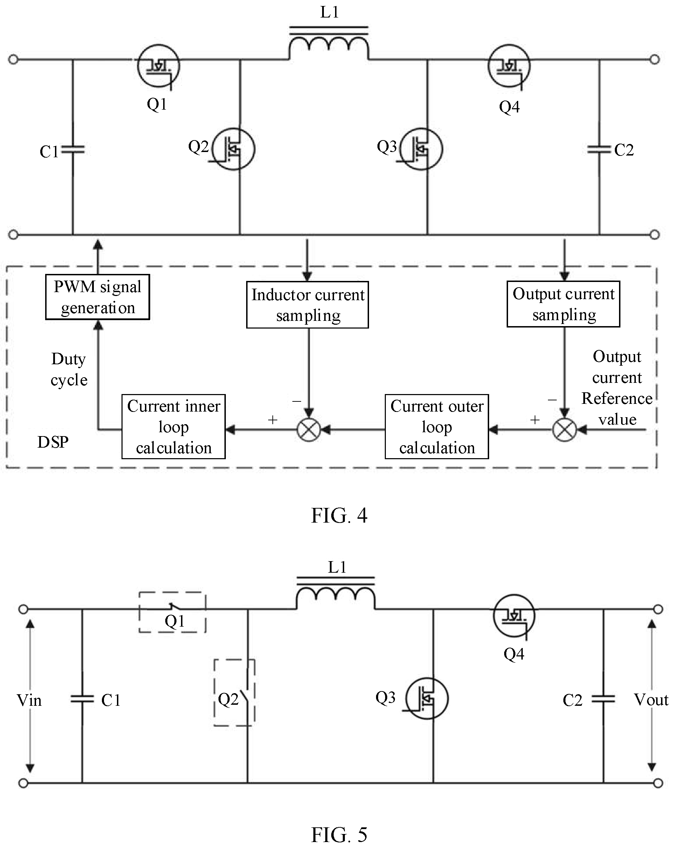

Refer to FIG. 4. FIG. 4 is a diagram of a structure of a DCDC converter according to an embodiment of this application. As shown in FIG. 4, the DCDC converter includes a first switch Q1, a second switch Q2, a third switch Q3, and a fourth switch Q4. A left side of the DCDC converter may be used a first end, and a right side of the DCDC converter may be used a second end. The four switches may form a synchronous Buck circuit and a synchronous Boost circuit. The first end of the DCDC converter is separately electrically connected to a first end of the first switch Q1 and a first end of the second switch Q2. The second end of the DCDC converter is separately electrically connected to a first end of the third switch Q3 and a first end of the fourth switch Q4. A second end of the first switch Q1 is electrically connected to the first end of the second switch Q2. A second end of the second switch Q2 is electrically connected to the first end of the third switch Q3. A second end of the third switch Q3 is electrically connected to a second end of the fourth switch Q4.

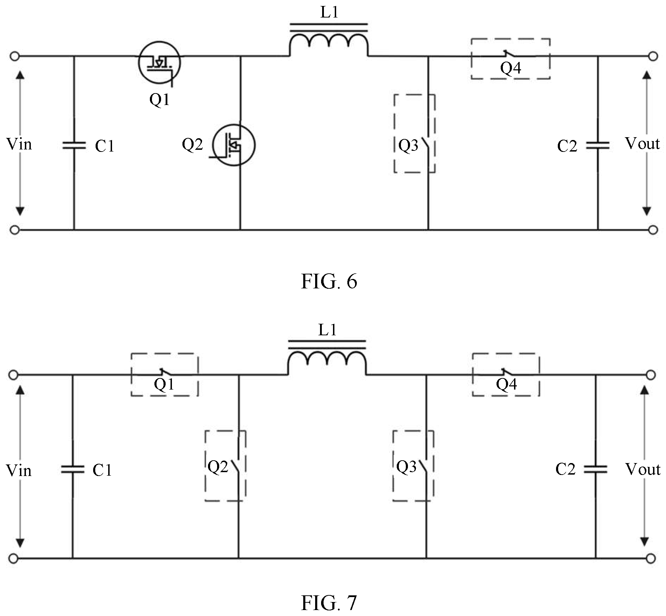

Based on a circuit structure in the foregoing embodiment, when the control unit controls the DCDC converter to operate in a Boost mode, as shown in FIG. 5, the control unit may control the first switch Q1 to be normally closed and control the second switch Q2 to be normally open. The third switch Q3 and the fourth switch Q4 are turned on at a first duty cycle in a complementary manner, so that the DCDC converter operates in the Boost mode. Similarly, based on the circuit structure in the foregoing embodiment, when the control unit controls the DCDC converter to operate in a Buck mode, as shown in FIG. 6, the control unit may control the third switch Q3 to be normally open and control the fourth switch Q4 to be normally closed. The first switch Q1 and the second switch Q2 are turned on at a second duty cycle in a complementary manner, so that the DCDC converter operates in the Buck mode. Similarly, based on the circuit structure in the foregoing embodiment, when the control unit controls the DCDC converter to operate in a pass-through mode, as shown in FIG. 7, the control unit may control the first switch Q1 and the fourth switch Q4 to be normally closed, and control the second switch Q2 and the third switch Q3 to be normally open, so that the DCDC converter operates in the pass-through mode.

It may be understood that, using the Buck mode as an example, both the first switch Q1 and the fourth switch Q4 are both high-side switches, and generally a bootstrap voltage boosting driving manner may be used. That is, for the fourth switch Q4, in a pulse width modulation (pulse width modulation, PWM) switching period, the third switch Q3 needs to be turned on in a specific time. Otherwise, when an energy of a bootstrap capacitor of the fourth switch Q4 is exhausted, the fourth switch Q4 is turned off. In this embodiment of this application, the third switch Q3 can be turned on at a small duty cycle, and the fourth switch Q4 can be turned on at a duty cycle close to 100%.

In a possible implementation, the DCDC converter may further include a first inductor L1, a first capacitor C1, and a second capacitor C2. The first inductor L1 may be configured to complete energy storage and energy discharge in an operating process of a main power circuit. The first capacitor C1 is an input voltage filter capacitor, and the second capacitor C2 is an output voltage filter capacitor. The four switches may be power transistors, metal-oxide-semiconductor field-effect transistors (metal-oxide-semiconductor field-effect transistors, MOSFET), or insulated gate bipolar transistors (insulated gate bipolar transistors, IGBTs). It may be understood that in this embodiment of this application, only the four switches are used as an example for description. The DCDC may further include more or fewer switches that can achieve same functions as this application. Quantities of switches, capacitors, and inductors are not limited in this application.

In a possible implementation, the DCDC converter may include a Buck-Boost main power circuit, a switch drive circuit, an input/output voltage and current signal sampling circuit, a digital signal processing (digital signal processing, DSP) main controller circuit, and a peripheral circuit. The Buck-Boost main power circuit may be configured to implement energy conversion between an input and an output of a system. The switch drive circuit may be configured to amplify a drive signal from a DSP main controller to drive the switch to be turned on or off. The signal sampling circuit may be configured to convert input/output voltage and current signals of a system into signals that can be read by the DSP main controller. The DSP main controller circuit may be configured to collect input signals and output signals of the system, receive and send control information, report an output state, and control a switch of the Buck-Boost main power circuit.

A loop structure may include two current loops. The two loops may be in an inner loop mode or an outer loop mode. An output current is an outer loop, and an inductor current is an inner loop.

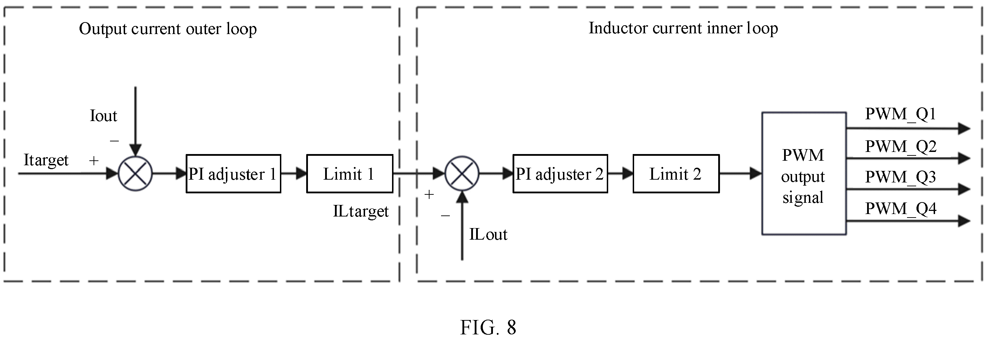

Refer to FIG. 8. FIG. 8 is a flowchart of control of a DCDC converter according to an embodiment of this application. As shown in FIG. 8, the DCDC converter may use a current double-closed-loop control policy. The DCDC converter may sample an output current and an inductor current of a main loop in real time. Outer loop PI adjustment is performed based on a difference between a target current and an actual current. An outer loop PI output is used as an inner loop current target. A duty cycle is calculated based on an inner loop PI output to drive a switch, thereby finally achieving a constant current output.

The flowchart of control of the DCDC converter may include an output current outer loop and an inductor current inner loop. The DCDC converter collects an output current $I_{out}$ in real time. A difference operation is performed between the output current and a target current $I_{target}$ of the DCDC converter calculated by a system unit. An error value current is calculated as an input of an outer loop PI adjuster. An output result of an outer loop PI adjuster is limited. A limited output current value is used as an inner loop inductor current value $IL_{target}$. The DCDC converter collects the inductor current $IL_{out}$ in real time. A difference operation is performed between the inductor current and a target inductor current value $IL_{target}$. An error value is calculated as an input of an inner loop PI adjuster. An output result of an inner loop PI adjuster is limited. A limited output value is converted into a PWM output signal, that is, PWM_Q1, PWM_Q2, PWM_Q3, and PWM_Q4. Finally, a closed-loop control output of switching in the Buck-Boost main power circuit is achieved.

In this embodiment, current double-closed-loop PI control is used, so that stable current control can be implemented, and small overshoot and excellent stability can be ensured.

An embodiment of this application further provides a power supply system. The power supply system includes an electrical device and the battery system according to any one of embodiments of this application. The battery system is configured to provide an electric energy to the electrical device. The power supply system may include a data processing and logic control unit to implement the battery control method in any one of the foregoing embodiments.

An embodiment of this application further provides an energy storage device. The energy storage device includes the battery system according to any one of embodiments of this application. The energy storage device may be a power station energy storage device, a power grid-side energy storage device (such as a large container-type energy storage product), an industrial and commercial energy storage device (such as a cabinet-type energy storage product), a household energy storage product, or another type of energy storage product. This is not limited in this application.

An embodiment of this application provides a computer-readable storage medium. The computer-readable storage medium stores a computer program. The computer program, when executed by a processor, implements the battery control method in any one of the foregoing embodiments.

An embodiment of this application provides a computer program product. The computer program product includes a computer program. The computer program, when executed by a processor, implements the battery control method in any one of the foregoing embodiments.

An embodiment of this application provides a chip. The chip includes an instruction. The instruction, when executed, implements the battery control method in any one of the foregoing embodiments.

In the description of this embodiment of this application, it should be noted that terms such as "first", "second", and the like are used to distinguish identical items or similar items having substantially the same functions. Those skilled in the art may understand that the terms such as "first", "second", and the like do not limit a quantity and an execution sequence, and the terms such as "first", "second", and the like do not indicate that items limited by the terms must be different. Therefore, the terms cannot be understood as a limitation on this application.

What is disclosed above is only a preferred embodiment of this application, which certainly cannot be used to limit the claims of this application. A person of ordinary skill in the art may understand that all or part of processes of implementing the above embodiment and equivalent changes made according to the claims of this application still fall within the scope covered by this application.

**Claims**

1. A battery control method, wherein the method comprises:

   obtaining (S101) a first voltage and a second voltage, wherein the first voltage is a voltage of a first battery module, the second voltage is a voltage of a second battery module, the first battery module is electrically connected to the second battery module, and the second battery module and the first battery module have different capacities; and
   controlling (S102) an operating mode of a direct current-direct current (DCDC) converter based on a voltage difference between the first voltage and the second voltage, wherein the DCDC converter is electrically connected to the second battery module, and the DCDC converter is configured to control an input power or an output power of the second battery module.

2. The control method according to claim 1, wherein the controlling the operating mode of the DCDC converter based on the voltage difference between the first voltage and the second voltage comprises:
   in a charging state, if the second voltage is less than the first voltage, and the voltage difference between the first voltage and the second voltage is greater than or equal to a first preset voltage threshold, controlling the DCDC converter to operate in a Buck mode, wherein the Buck mode is used to step down an input voltage of the second battery module to a third voltage, and a difference between the third voltage and the second voltage is less than or equal to a first threshold.

3. The control method according to claim 1, wherein the controlling the operating mode of the DCDC converter based on the voltage difference between the first voltage and the second voltage comprises:
   in a discharging state, if the second voltage is less than the first voltage, and the voltage difference between the first voltage and the second voltage is greater than or equal to the first preset voltage threshold, controlling the DCDC converter to operate in a Boost mode, wherein the Boost mode is used to step up an output voltage of the second battery module to a fourth voltage, and a difference between the fourth voltage and the first voltage is less than or equal to a second threshold.

4. The control method according to claim 1, wherein the controlling the operating mode of the DCDC converter based on the voltage difference between the first voltage and the second voltage comprises:
   in the charging state, if the second voltage is greater than the first voltage, and the voltage difference between the first voltage and the second voltage is greater than or equal to a second preset voltage threshold, controlling the DCDC converter to operate in the Boost mode, wherein the Boost mode is used to step up the input voltage of the second battery module to a fifth voltage, and a difference between the fifth voltage and the second voltage is less than or equal to a third threshold.

5. The control method according to claim 1, wherein the controlling the operating mode of the DCDC converter based on the voltage difference between the first voltage and the second voltage comprises:
   in the discharging state, if the second voltage is greater than the first voltage, and the voltage difference between the first voltage and the second voltage is greater than or equal to the second preset voltage threshold, controlling the DCDC converter to operate in the Buck mode, wherein the Buck mode is used to step down the output voltage of the second battery module to a sixth voltage, and a difference between the sixth voltage and the first voltage is less than or equal to a fourth threshold.

6. The control method according to claim 1, wherein the controlling the operating mode of the DCDC converter based on the voltage difference between the first voltage and the second voltage comprises:
   in the charging state or the discharging state, if the voltage difference between the first voltage and the second voltage is less than or equal to a third preset voltage threshold, controlling the DCDC converter to operate in a pass-through mode, wherein the pass-through mode is adapted to not change a magnitude of the input voltage or the output voltage of the second battery module.

7. A battery system, comprising:

   a first battery module (201), wherein a positive electrode of the first battery module (201) is electrically connected to a positive terminal of a direct current bus, and a negative electrode of the first battery module (201) is electrically connected to a negative terminal of the direct current bus;

a second battery module (202), wherein the second battery module (202) is electrically connected to the first battery module (201), the second battery module (202) is electrically connected to the direct current bus, and the second battery module (202) and the first battery module (201) have different capacities;

a direct current-direct current (DCDC) converter (203), wherein the DCDC converter (203) is electrically connected to the second battery module (202), the DCDC converter (203) is electrically connected to the direct current bus, and the DCDC converter (203) is configured to control an input power or an output power of the second battery module (202); and

a control unit (204), configured to obtain a first voltage and a second voltage, and control an operating mode of the DCDC converter (203) of the battery system based on a voltage difference between the first voltage and the second voltage, wherein the first voltage is a voltage of the first battery module (201), and the second voltage is a voltage of the second battery module (202).

8. The battery system according to claim 7, wherein the control unit (204) configured to control the operating mode of the DCDC converter (203) of the battery system based on the voltage difference between the first voltage and the second voltage is specifically configured to:
if the second voltage is less than the first voltage, the voltage difference between the first voltage and the second voltage is greater than or equal to a first preset voltage threshold, and the battery system is in a charging state, control the DCDC converter (203) to operate in a Buck mode, wherein the Buck mode is used to step down an input voltage of the second battery module (202) to a third voltage, and a difference between the third voltage and the second voltage is less than or equal to a first threshold.

9. The battery system according to claim 7, wherein the control unit (204) configured to control the operating mode of the DCDC converter (203) of the battery system based on the voltage difference between the first voltage and the second voltage is specifically configured to:
if the second voltage is less than the first voltage, the voltage difference between the first voltage and the second voltage is greater than or equal to the first preset voltage threshold, and the battery system is in a discharging state, control the DCDC converter (203) to operate in a Boost mode, wherein the Boost mode is used to step up an output voltage of the second battery module (202) to a fourth voltage, and a difference between the fourth voltage and the first voltage is less than or equal to a second threshold.

10. The battery system according to claim 7, wherein the control unit (204) configured to control the operating mode of the DCDC converter (203) of the battery system based on the voltage difference between the first voltage and the second voltage is specifically configured to:
if the second voltage is greater than the first voltage, the voltage difference between the first voltage and the second voltage is greater than or equal to a second preset voltage threshold, and the battery system is in the charging state, control the DCDC converter to operate in the Boost mode, wherein the Boost mode is used to step up the input voltage of the second battery module (202) to a fifth voltage, and a difference between the fifth voltage and the second voltage is less than or equal to a third threshold.

11. The battery system according to claim 7, wherein the control unit (204) configured to control the operating mode of the DCDC converter (203) of the battery system based on the voltage difference between the first voltage and the second voltage is specifically configured to:
if the second voltage is greater than the first voltage, the voltage difference between the first voltage and the second voltage is greater than or equal to the second preset voltage threshold, and the battery system is in the discharging state, control the DCDC converter (203) to operate in the Buck mode, wherein the Buck mode is used to step down the output voltage of the second battery module (202) to a sixth voltage, and a difference between the sixth voltage and the first voltage is less than or equal to a fourth threshold.

12. The battery system according to claim 7, wherein the control unit (204) configured to control the operating mode of the DCDC converter (203) of the battery system based on the voltage difference between the first voltage and the second voltage is specifically configured to:
if the voltage difference between the first voltage and the second voltage is less than or equal to a third preset voltage threshold, and the battery system is in the charging state or the discharging state, control the DCDC converter (203) to operate in a pass-through mode, wherein the pass-through mode is adapted to not change a magnitude of the input voltage or the output voltage of the second battery module (202).

13. A power supply system, comprising an electrical device and the battery system according to any one of claims 7 to 12, wherein the battery system is configured to provide an electric energy to the electrical device.

**14.** An energy storage device, comprising the battery system according to any one of claims 7 to 12.

**15.** A computer-readable storage medium, wherein the computer-readable storage medium stores an instruction, and the instruction, when executed by a processor, causes the battery control method according to any one of claims 1 to 6 to be implemented.

**16.** A chip, wherein the chip comprises an instruction, and the instruction, when executed, causes the battery control method according to any one of claims 1 to 6 to be implemented.

S101

Obtain a first voltage and a second voltage

S102

Control an operating mode of the DCDC converter based on a voltage difference between the first voltage and the second voltage

FIG. 1

Positive terminal of the direct current bus

Negative terminal of the direct current bus

DCDC converter 203

Control unit 204

First battery module 201

Second battery module 202

FIG. 2

201

BMS 11

Battery string 11 ... Battery string 1M

202

BMS 21

Battery string 21 ... Battery string 2N

FIG. 3

FIG. 4

FIG. 5

FIG. 6

FIG. 7

Output current outer loop

Inductor current inner loop

Iout

Itarget

PI adjuster 1

Limit 1

ILtarget

PI adjuster 2

Limit 2

PWM output signal

PWM_Q1

PWM_Q2

PWM_Q3

PWM_Q4

ILout

FIG. 8

## INTERNATIONAL SEARCH REPORT

| International application No. |
|---|
| **PCT/CN2024/102753** |

### A. CLASSIFICATION OF SUBJECT MATTER

H02J7/34(2006.01)i

According to International Patent Classification (IPC) or to both national classification and IPC

### B. FIELDS SEARCHED

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT; CNABS; ENTXT; ENTXTC; CJFD: 储能, 电池, 扩容, 增容, 兼容, 均衡, 压差, 差值, 变流器, 母线并网, storage, battery, DC/DC, DC bus, capacity increase, balace

### C. DOCUMENTS CONSIDERED TO BE RELEVANT

| Category* | Citation of document, with indication, where appropriate, of the relevant passages | Relevant to claim No. |
|---|---|---|
| PX | CN 118232494 A (BYD CO., LTD.) 21 June 2024 (2024-06-21) claims 1-11, description, paragraphs 40-89, and figures 1-8 | 1-16 |
| X | CN 111585333 A (SUNGROW POWER SUPPLY CO., LTD.) 25 August 2020 (2020-08-25) description, paragraphs 49-89, and figures 1-5 | 1, 7, 13-16 |
| A | CN 115764026 A (YOUHONGMENG SMART ENERGY (WUXI) CO., LTD.) 07 March 2023 (2023-03-07) entire document | 1-16 |
| A | CN 207896683 U (CHENGDU EXPERT OF BATTERY DESIGN TECHNOLOGY CO., LTD.) 21 September 2018 (2018-09-21) entire document | 1-16 |
| A | US 2023216335 A1 (SHANGHAI BAIZHU CHENGHANG NEW ENERGY CO., LTD.) 06 July 2023 (2023-07-06) entire document | 1-16 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 September 2024** | **24 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102753**

| Patent document cited in search report | | | Publication date (day/month/year) | Patent family member(s) | | | Publication date (day/month/year) |
|---|---|---|---|---|---|---|---|
| CN | 118232494 | A | 21 June 2024 | None | | | |
| CN | 111585333 | A | 25 August 2020 | CN | 111585333 | B | 24 May 2022 |
| CN | 115764026 | A | 07 March 2023 | None | | | |
| CN | 207896683 | U | 21 September 2018 | CN | 107591863 | A | 16 January 2018 |
| US | 2023216335 | A1 | 06 July 2023 | US | 11804730 | B2 | 31 October 2023 |
| | | | | CN | 114865772 | B | 17 January 2023 |
| | | | | CN | 114865772 | A | 05 August 2022 |

Form PCT/ISA/210 (patent family annex) (July 2022)

**REFERENCES CITED IN THE DESCRIPTION**

**Patent documents cited in the description**

- CN 202310956044